# EUROPÄISCHE PATENTSCHRIFT

(11) **EP 1 258 525 B1**
(45) Veröffentlichungstag und Bekanntmachung des Hinweises auf die Patenterteilung: **07.09.2005**
(21) Anmeldenummer: 02008975.1
(22) Anmeldetag: 23.04.2002
(51) Int. Cl.: C11B 15/00, A23D 9/05, A23L 3/36, A23G 1/04, A23G 1/00

(54) **Vorrichtung zur Herstellung von Schokoladepartikeln**
Apparatus for making chocolate particles
Appareil de fabrication de particules de chocolat

(30) Priorität: 19.05.2001 DE 10124471
(43) Veröffentlichungstag der Anmeldung: 20.11.2002
(73) Patentinhaber: FRANZ ZENTIS GMBH & CO., 52070 Aachen (DE)
(72) Erfinder: Baumer, Johannes, 4710 Lontzen (BE); Becker, Jürgen, Dr., 52477 Alsdorf (DE); Otte, Dietmar, Dipl.-Ing., 52076 Aachen (DE); Stauber, Dieter, Dr., 52134 Herzogenrath (DE)
(74) Vertreter: Bauer, Dirk

(56) Entgegenhaltungen:
- EP-A- 0 332 287
- EP-A- 0 617 248
- EP-A- 0 998 854
- EP-A- 1 121 867
- FR-A- 2 638 066
- GB-A- 351 132
- GB-A- 736 010
- GB-A- 2 023 789
- US-A- 3 737 328
- US-A- 4 929 456
- US-A- 6 000 229

## Beschreibung

Die Erfindung betrifft eine Vorrichtung zur Herstellung von Partikeln Schokolade, wobei das in flüssiger Form vorliegende Lebensmittel in Form eines Filmes oder in Form von Streifen mittels einer Dosiereinrichtung auf eine bewegte Oberfläche einer Kühleinrichtung aufbringbar ist, mit der das Lebensmittel zumindest teilweise aushärtbar ist.

Bei Vorrichtungen zur Herstellung von Schokoladenpartikeln ist es allgemein bekannt, die flüssige Schokolade mit einer Temperatur von ca. 30°C bis 35°C auf eine gekühlte Oberfläche zunächst in Form einer Kühlwalze aufzubringen. Das Aufbringen erfolgt in der Regel in Form eines kontinuierlichen Films mit einer möglichst gleichbleibenden Dicke, die beispielsweise mit Hilfe einer Kalibrierwalze einstellbar ist. Der Außenmantel der Kühlwalze und der Außenmantel der Kalibrierwalze schließen einen Spalt in Dicke des Schokoladenfilms ein. Das Passieren eines dickeren Films wird durch die Kalibrierwalze verhindert, weshalb es möglich ist, vor der Kalibrierwalze einen Stau des flüssigen Lebensmittels, d.h. ein Bad mit einer gröBeren Tiefe als die Dicke des späteren Films zu erzeugen.

Die Oberflächentemperatur der Kühlwalze beträgt im Moment des Kontakts mit der dem Bad flüssigen Schokolade ca. 5°C bis 10°C. Nach dem ersten Kontakt der Kühlwalze mit der Schokolade findet zunächst im Bereich der Kontaktfläche eine Kristallisation in Form einer dünnen Schicht statt. Des weiteren kommt es, ausgehend von der der Kühlwalze abgewandten Oberfläche des Schokoladenfilms nach dem Passieren der Kalibrierwalze ebenfalls zu einer beginnenden Kristallisation aufgrund des dort stattfindenden konvektiven Wärmeübergangs auf das umgebende gasförmige Medium, dessen Temperatur bei ca. 10°C bis ca. 20°C liegt. Aus der Mitte des noch flüssigen Schokoladenfilms erfolgt eine Wärmeleitung in Richtung auf beide Oberflächen, d. h. in Richtung des Kühlwalzenmantels als auch in Richtung des die Kühlwalze umgebenden gasförmigen Mediums.

Der Schokoladenfilm verläßt die Kühlwalze bei den bekannten Verfahren in einem nur von den Rändern her, d. h. nur teilweise auskristallisierten Zustand und wird anschließend auf die Oberfläche eines Kühlbandes gelegt, das durch einen ca. 10 Meter langen bis 30 Meter langen Kühltunnel hindurchgeführt wird. Durch den Kühltunnel wird im Gegenstrom kalte Luft mit einer Temperatur von ca. 10°C bis ca. 15°C hindurch geleitet. Der Grund für einen apparativ derart aufwendigen Abkühlprozeß liegt in den besonderen Eigenschaften, die von einer hochwertigen Schokolade gefordert werden. So ist nur durch Abkühlung mit einem sehr geringen Temperaturgradienten eine besonders erwünschte Kristallstruktur zu erhalten, bei der die ausgehärtete Schokolade möglichst lange den erwünschten Glanz und die gewünschte Beständigkeit gegen eine Fettreifbildung besitzt.

In der jüngeren Vergangenheit ist jedoch zunehmend das Bedürfnis bei den Verwendern von Schokopartikeln aufgekommen, diese Partikel auch in wäßrigen, nicht gefrorenen Medien wie beispielsweise Joghurt oder Süßdesserts einzusetzen. Um Probleme mit der Mikrobiologie auch nach einer gewissen Lagerungszeit des Schokopartikel enthaltenden Endprodukts zu vermeiden, ist eine möglichst geringe Anzahl von Keimen in der Schokolade anzustreben. Da Rohkakao von Natur aus eine vergleichsweise starke, bei der Verarbeitung zu Schokolade außerhalb wäßriger, nicht gefrorener Medien aber an sich unschädliche Verkeimung besitzt, ist eine Keimreduzierung der flüssigen Schokolade, beispielsweise durch Pasteurisierung oder Sterilisierung, notwendig. Das Ziel von keimarmen Schokopartikeln kann jedoch nur erreicht werden, wenn - im Anschluß an eine vorbereitende Pasteurisierung oder Sterilisierung der Schokolade - auch bei der Partikelausformung eine neue Verkeimung unterbunden werden kann. Bei den Verfahren nach dem Stand der Technik und den zugehörigen Vorrichtungen in ihren erheblichen Baugrößen, ist die Sicherstellung einer Keimarmut oder gar Keimfreiheit mit wirtschaftlich vertretbaren Maßnahmen kaum zu erreichen. So ist es kostenmäßig nicht darstellbar, die gesamte Partikelausformung, d. h. auch die Aushärtung auf einer Kühlwalze und einem anschließenden Kühlband unter Reinraumbedingungen, wie beispielsweise im Pharmabereich, durchzuführen.

Als Nachteil der bekannten Partikelausformung in Form eines kontinuierlichen Filmes und dessen anschließender Zerkleinerung im ausgehärteten Zustand zur Erzielung der gewünschten Partikelgröße ist es anzusehen, daß eine exakte geometrische Form der Partikel nicht sicherzustellen ist. So lassen sich beispielsweise mit Hilfe einer Brechereinrichtung in Abhängigkeit von den gewählten Brechwerkzeugen lediglich Partikel mit einer bestimmten Größenverteilung, nicht jedoch exakt einer Größe, erreichen. Des weiteren ist der konstruktive und apparative Aufwand für die nacheinander ablaufenden Schritte der Ausformung eines kontinuierlichen Filmes sowie einer Zerkleinerung des ausgehärteten Filmes vergleichsweise groß.

Aus der EP 0 976 333 A2 ist ein alternatives Verfahren zur Herstellung von Partikeln eines Lebensmittels bekannt. Hierbei findet eine Vertropfung des flüssigen Lebensmittels an einem Düsenstock statt, wonach die Tropfen eine Fallstrecke innerhalb eines ca. 10 bis 15 Meter hohen Fallturms durchfallen. Durch den Fallturm wird im Gegenstrom zu den fallenden Lebensmitteltropfen ein Kühlgas geleitet, mit dem die warmen Tropfen in einem konvektiven Wärmeaustausch stehen. Am Ende der Fallstrecke sind die Lebensmittelpartikel zumindest so weit ausgehärtet, daß sie beim Auftreffen durch die auftretende Beschleunigung nicht mehr plastisch verformbar sind. Je nach Einstellung der Verfahrensparameter (Temperatur am Düsenstock, Öffnungsquerschnitt der Düsen, Temperatur und Geschwindigkeit des Kühlgases) lassen sich sowohl sehr gleichmäßig geformte kugelförmige Partikel als auch fadenförmige bzw. bandförmige Partikel in unregelmäßiger Länge sowie Zwischenformen zwischen den vorgenannten Arten erzeugen. Wird das auszuformende Lebensmittel bei seiner Vertropfung in sterilisierter oder pasteurisierter Form zugeführt, so lassen sich sterile bzw. pasteurisierte Partikel erzeugen, wenn der Fallturm vor Aufnahme der Produktion gleichfalls sterilisiert bzw. pasteurisiert wurde. Nachteilig bei dem bekannten Verfahren ist einerseits die vergleichsweise geringe Produktionskapazität und zum anderen der erhebliche Bauaufwand, insbesondere die unverzichtbar große Ausdehnung in vertikale Richtung zur Erzielung der erforderlichen Abkühlzeiten. Außerdem lassen sich mit dem vorbekannten Verfahren nicht alle gewünschten Partikelformen realisieren.

EP 617248 offenbart ein Gerät zum Gefrieren von Teilchen, mit einem Drehteil mit einer Gefrierfläche, Mitteln zum Verteilen der Teilchen auf dieser Fläche, Mitteln zum Kühlen dieser Fläche und Mitteln zum Sammeln der Teilchen.

EP 998854 offenbart ein Verfahren und eine Vorrichtung zur Hersttelung von Granulaten aus flüssigem Vorprodukt.

Der Erfindung liegt die Aufgabe zugrunde, eine Vorrichtung der oben beschriebenen Art so weiter zu entwickeln, daß auf kostengünstige Weise die Herstellung von Lebensmittelpartikeln möglich ist, wobei ohne größeren Aufwand der Wechsel zwischen unterschiedlichen Partikelgrößen möglich sein soll. Des weiteren sollen mit der vorzuschlagenden Vorrichtung pasteurisierte oder sterilisierte Partikel herstellbar sein, weshalb die gewählten Dosiereinrichtungen insbesondere die Bedingungen an eine zuverlässige und einfache Pasteurisierbarkeit bzw. Sterilisierbarkeit erfüllen muß.

Ausgehend von einer Vorrichtung der eingangs beschriebenen Art wird diese Aufgabe erfindungsgemäß dadurch gelöst, daß die Dosiereinrichtung eine elastisch verformbare Membran aufweist, die mit einer Oberfläche mit dem flüssigen, sterilisierten oder pasteurisierten Lebensmittel in Kontakt ist und die in eine Richtung ungefähr senkrecht zu ihrer Ebene reversibel auslenkbar ist, wodurch das Volumen eines Förderraums für das Lebensmittel veränderbar ist, und daß die Dosiereinrichtung und die Kühleinrichtung gekapselt innerhalb eines geschlossenen, im Inneren sterilisierbaren oder pasteurisierbaren Behältnisses angeordnet sind.

Aufgrund der Volumenänderung des Förderraumes für das Lebensmittel mit Hilfe der Auslenkung einer elastisch verformbaren Membran wird eine einfache Möglichkeit geschaffen, die den Durchtrittsquerschnitt der Dosiereinrichtung durchströmende Menge des Lebensmittels sehr exakt zu dosieren und dabei gleichzeitig den Anforderungen an eine problemlose Sterilisierbarkeit bzw. Pasteurisierbarkeit der Vorrichtung vor Produktionsbeginn sicherzustellen, da die Membran den Förderraum bei dessen Sterilisierung oder Pasteurisierung dicht abschließt, so daß beispielsweise eine Heißdampfsterilisierung oder auch Heißluftsterilisierung des Förderraums der Dosiereinrichtung möglich ist. Insbesondere kann durch Verwendung einer elastisch verformbaren Membran auf Ventileinrichtungen mit mechanisch abdichtenden Bauteilen verzichtet werden. Insbesondere beim Anwendungsfall an einer starken Abkühlung des flüssigen Lebensmittels unmittelbar nach Verlassen der Dosiereinrichtung kann somit die Gefahr vermieden werden, daß es zu sehr unerwünschten Ablagerungen an den Ventilsitzflächen kommen kann, beispielsweise durch unerwünschte frühzeitig stattfindende Kristallisation.

Des weiteren ist ein Vorteil der erfindungsgemäßen Vorrichtung darin zu sehen, daß auf die Durchführung von axial beweglichen Stößeln durch die Begrenzung des Förderraums, das heißt des mit dem flüssigen und sterilisierten bzw. pasteurisierten Lebensmittel in Kontakt tretenden Raums verzichtet werden kann. Derartige Durchführungen sind als besonders kritisch in Bezug auf den Vorgang der Sterilisierung bzw. Pasteurisierung der Vorrichtung anzusehen, da keine definierte Grenze zwischen dem sterilisierten bzw. pasteurisierten Bereich und der übrigen Umgebung der Vorrichtung vorliegt. Viel mehr wird mit jeder axialen Hubbewegung eines derartigen Stößels die Sterilgrenze von außen nach innen in den Sterilraum hinein durchtreten, so daß es zu einem unkontrollierten Fördervorgang von Keimen aus der Umgebung in den Sterilraum herein kommen kann. Mit einer Membran liegt jedoch ein hermetischer Abschluß des sterilisierbaren oder pasteurisierbaren Bereichs vor. Selbst bei einer oszillierenden Förderbewegung der Membran wird dieser hermetische Abschluß des Förderraums nicht aufgehoben.

Gemäß einer Ausgestaltung der erfindungsgemäßen Vorrichtung ist vorgesehen, daß die Membran einen Abschnitt der Grenze des sterilisierbaren oder pasteurisierbaren Bereichs bildet. In diesem Fall stehen für die Betätigung der Membran von der dem sterilisierbaren oder pasteurisierbaren Bereich abgewandten Oberfläche her sämtliche Möglichkeiten offen. So kann beispielsweise die Membran mit einem kraft-, form- oder stoffschlüssig verbundenen Stößel gekoppelt sein, für dessen Antrieb sämtliche Möglichkeiten offen stehen, ohne daß auf Belange der Sterilisierbarkeit oder Pasteurisierbarkeit geachtet werden müßte, da dieser Antrieb sich bereits vollständig außerhalb der Grenze des sterilisierbaren oder pasteurisierbaren Bereiches befindet.

Alternativ zu der vorgenannten Ausgestaltung ist es ebenfalls möglich, daß die Membran auf der dem Lebensmittel abgewandten Seite mit einem Betätigungsstößel verbunden ist, der durch einen elastisch in seiner Länge veränderbaren hermetisch abgeschlossenen Kompensator durch die Grenze des sterilisierbaren oder pasteurisierbaren Bereiches hindurchführbar ist. In diesem Fall bildet nicht die Membran selbst die Grenze zu dem sterilisierbaren oder pasteurisierbaren Bereich, so daß im Falle ihrer Beschädigung oder einer unvollkommenen Dichtheit ein Eindringen von Keimen in den Förderraum und damit in das flüssige Lebensmittel nicht zu befürchten ist, da auch der Bereich der an die gegenüberliegende Oberfläche der Membran angrenzt sterilisiert oder pasteurisiert ist.

Vorzugsweise weist die Dosiereinrichtung mindestens eine Düse für den Austritt des flüssigen Lebensmittels aus dem Förderraum auf. Insbesondere bei der Herstellung von Schokoladenpartikeln ist es von Vorteil, wenn eine Leiste von Kapillardüsen vorgesehen ist, deren Austrittsdurchmesser ca. 0,5 mm bis 3 mm beträgt.

Die Erfindung weiter ausgestaltend wird vorgeschlagen, daß die Austrittsöffnung der Kapillardüsen einen Abstand von der bewegten Oberfläche der Kühleinrichtung zwischen 0,5 mm und 10 mm aufweist. Bei der Kühleinrichtung kann es sich beispielsweise um eine rotierende Kühlwalze oder ein umlaufend bewegtes Kühlband oder eine Aneinanderreihung der beiden vorgenannten Einrichtungen handeln. Aus Gründen einer Minimierung des Bauraums der Vorrichtung ist es zu bevorzugen, die vollständige Aushärtung des flüssigen Lebensmittels entweder allein auf einer Kühlwalze oder allein auf einem Kühlband erfolgen zu lassen. Die für die Herstellung von Sterilbedingungen erforderliche Kapselung der Gesamtvorrichtung erfordert in diesem Fall einen geringeren Aufwand.

Der Aufwand zur Gewährleistung der Bedingungen für die kontinuierliche Produktion sterilisierter oder pasteurisierter Partikel läßt sich weiter senken, wenn die Temperatur eines im Inneren des Behältnisses befindlichen Gases im Bereich der Aufgabe des flüssigen Lebensmittels weniger als 0°C, vorzugsweise weniger als -20°C beträgt und die Temperatur der Oberfläche der Kühleinrichtung im Bereich der Aufgabe des flüssigen Lebensmittels weniger als 0°C, vorzugsweise weniger als -20°C beträgt. Die Größe und somit auch die Kosten für die Kapselung lassen sich durch die Verkürzung der Aushärtungszeit wesentlich senken. Partikel, die unter Anwendung eines derart hohen Temperaturgradienten ausgehärtet sind, weisen zwar nicht die für herkömmliche Schokolade typischen Kristalleigenschaften auf, eignen sich jedoch insbesondere für die Verwendung in einem wäßrigen, nicht gefrorenen Medium, da insbesondere das Kriterium des Glanzes der Partikel im trockenen Zustand irrelevant ist. Aus geschmacklicher und sensorischer Sicht sind derartig rasch ausgehärtete Schokopartikel einwandfrei.

Schließlich wird gemäß der Erfindung noch vorgeschlagen, daß eine kontinuierlich betreibbare Drehkolbenpumpe für die Förderung des Lebensmittels durch den Förderraum und den Durchtrittsquerschnitt der Dosiereinrichtung vorgesehen ist. Im Gegensatz zu beispielsweise Hub-Kolbenpumpen ist bei Drehkolbenpumpen die Verwendung von Rückschlagventilen in einem Leitungsabschnitt zwischen der Pumpe und dem Förderraum verzichtbar. Bei einer Auslenkung der Membran in den Förderraum hinein, und somit einer Verringerung von dessen Volumen, kann die daraus resultierende Druckerhöhung in dem Förderraum keine Rückströmung des flüssigen Lebensmittels auf die Drehkolbenpumpe, d.h. entgegen der Förderrichtung, bewirken, da die Drehkolbenpumpe zu jedem Zeitpunkt mit ihrem Förderorgan den Querschnitt der Förderleitung vollständig versperrt. Die Druckerhöhung in dem Förderraum der Dosiereinrichtung in Folge der Membranauslenkung führt somit stets zu der beabsichtigten Förderung des flüssigen Lebensmittels durch den Durchtrittsquerschnitt der Dosiereinrichtung hindurch, d. h. auf die aufnehmende Oberfläche der Kühleinrichtung zu. Auf diese Weise kann die Unterbrechung bzw. Wiederaufnahme des aus der Dosiereinrichtung austretenden flüssigen Lebensmittels sehr effizient gesteuert werden.

Die Erfindung wird nachfolgend anhand eines Ausführungsbeispiels einer Vorrichtung zur Herstellung von Schokoladenpartikeln, die in der Zeichnung dargestellt ist, näher erläutert.

Es zeigt:
- Fig. 1: eine schematische Seitenansicht einer Vorrichtung zur Herstellung von Schokoladenpartikeln mit einer Dosiereinrichtung zur dosierten Abgabe der sterilisierten flüssigen Schokolade;
- Fig. 2: eine Vorderansicht der Dosiereinrichtung mit einer Membran und
- Fig. 3: eine Draufsicht auf die Dosiereinrichtung.

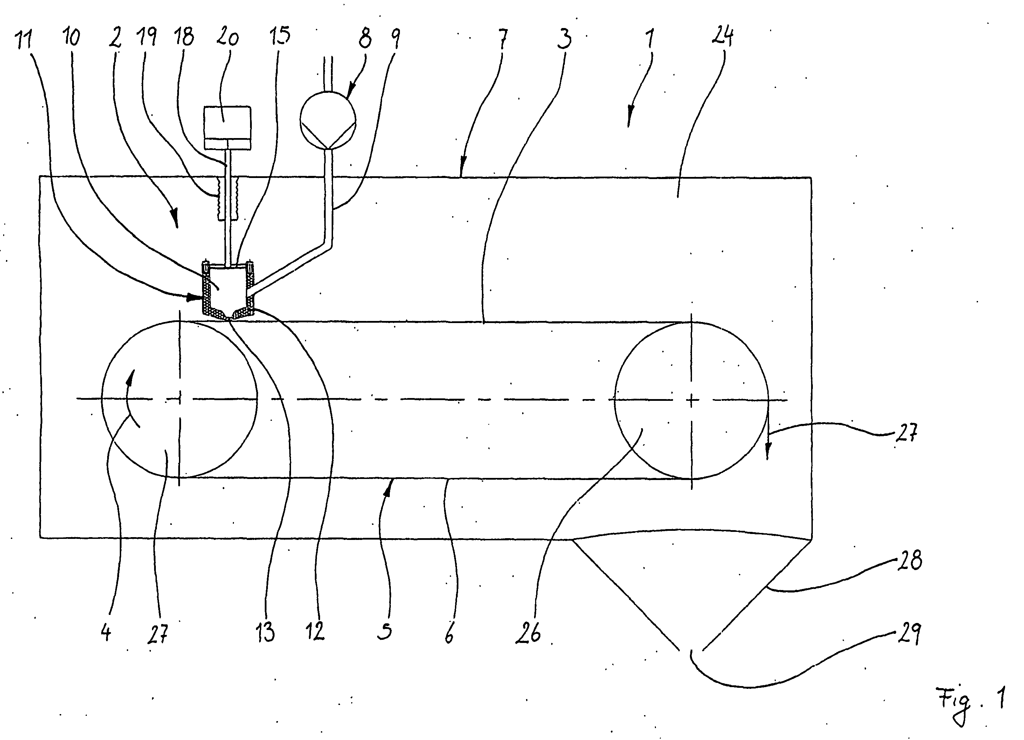

Eine in Figur 1 gezeigte Vorrichtung 1 zur Herstellung von sterilen Schokoladenpartikeln weist eine Dosiereinrichtung 2 auf, mit der die flüssige Schokolade auf eine Oberfläche einer Kühleinrichtung 5 in Form eines sich in Richtung des Pfeils 4 umlaufend bewegenden Kühlbandes 6 aufbringbar ist. Die Vorrichtung 1 umfaßt ein äußeres Edelstahlbehältnis 7, das die Kühleinrichtung 5 und die Dosiereinrichtung 2 vollständig einkapselt. Bei dem Behältnis 7 handelt es sich um einen bis ca. 3 bar absolut Druck druckfesten zylindrischen Edelstahlkessel.

Die zu portionierende und zu Partikeln auszuformende Schokolade wird in einer nicht näher dargestellten Sterilisationsvorrichtung unter Anwendung von Temperatur und Druck sowie unter Zusatz von Wasserdampf sterilisiert. Die sterilisierte Schokolade wird aus einem gleichfalls nicht abgebildeten Zwischenspeicher mit Hilfe einer Fördereinrichtung 8 in Form einer Verdrängerpumpe durch eine Förderleitung 9 in ein Reservoir 10 der Dosiereinrichtung 2 gefördert. Während des Betriebs der Vorrichtung 1 ist das Reservoir 10 im Wesentlichen vollständig mit flüssiger Schokolade befüllt.

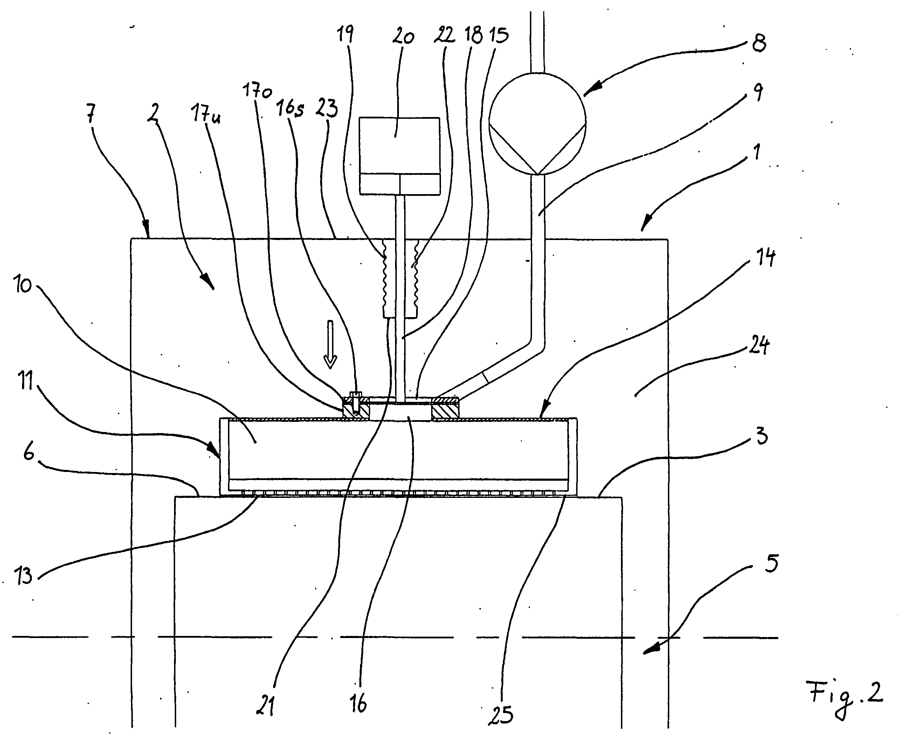

Wie sich insbesondere aus Figur 2 ergibt, befindet sich das Reservoir 10 innerhalb eines langgestreckten, rillenförmigen Behältnisses 11, dessen Mantel isoliert und im Innern mit einer nicht sichtbaren Heizeinrichtung versehen ist, um die Schokolade im schmelzflüssigen Zustand und auf dem gewünschten Temperatur- und auch Viskositätsniveau zu halten. Das Behältnis 11 besitzt in seinem Boden 12 eine Vielzahl von in Längsrichtung äquidistant nebeneinander angeordneten Kapillardüsen 13, die in ihrer Gesamtheit eine sich über einen Großteil der Breite des Kühlbandes 6 erstreckende Breite besitzt.

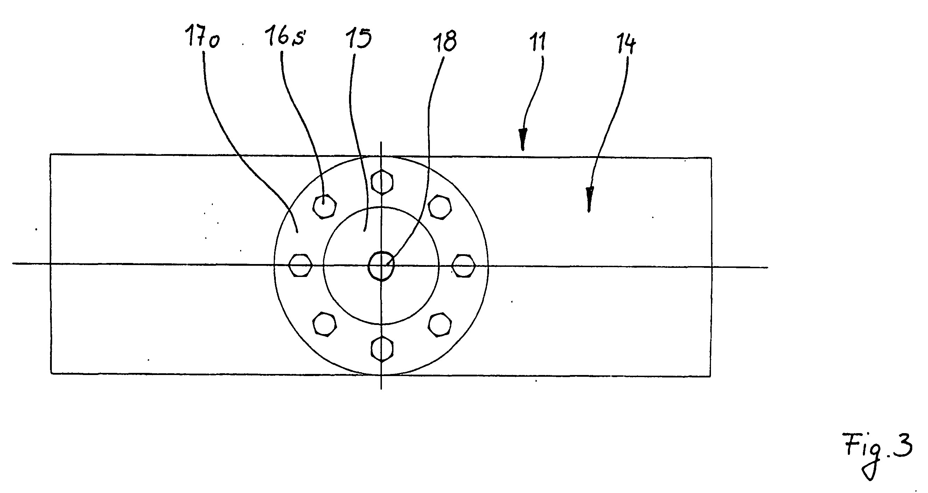

Das Behältnis 11 ist an seiner Oberseite mit einem Deckel 14 verschlossen, in dessen Mittelbereich (vergleiche Figur 3) sich eine mit einer Membran 15 gasdicht verschlossene Öffnung 16 befindet. Die Membran 15 ist mittels Schrauben 16 zwischen einem oberen Flansch 17o und einem unteren Flansch 17u abgedichtet eingespannt.

An der dem Reservoir 10 abgewandten Oberfläche der Membran 15 ist ein Stößel 18 befestigt, der durch einen balgartigen Kompensator 19 aus Edelstahl hindurch aus dem äußeren Behältnis 7 der Vorrichtung 1 herausgeführt ist. Der Stößel 18 ist mit einer elektrischen oder pneumatischen Antriebseinrichtung 20 kraftschlüssig verbunden, mit der der Stößel 18 oszillierend auf- und abbewegt werden kann. Diese Auf- und Abbewegung des Stößels 18 überträgt sich auf die Membran 15, die in ihrem Mittelbereich in der Nähe des Stößels 18 am stärksten und zu dem oberen Flansch 17o hin immer weniger ausgelenkt wird.

Der Kompensator 19 besitzt einen faltenbalgartigen Außenmantel und ist im Bereich seiner unteren Stirnfläche 21 mit dem Außenmantel des Stößels 18 verschweißt. Im Bereich einer oberen ringförmigen Stirnfläche 22 ist der Kompensator 19 mit einer oberen Wand 23 des Behältnisses 7 verschweißt. Auf diese Weise ist eine hermetische druckdichte Abschottung des Inneren 24 des Behältnisses 7 gegeben, obwohl der Stößel 18 in vertikale Richtung beweglich ist.

Im Betrieb der Vorrichtung 1 wird mit Hilfe der Fördereinrichtung 8 kontinuierlich flüssige sterilisierte Schokolade durch die Förderleitung 9 in das Reservoir 10 des Behältnisses 11 der Dosiereinrichtung 2 gefördert. Das Reservoir 10 ist bis unter die diesem zugewandte Unterseite der Membran 15 mit flüssiger Schokolade gefüllt, die mit Hilfe der Heizeinrichtung des Behältnisses 11 auf die gewünschte Viskosität einstellbar ist.

Die Membran 15 vollführt in Folge einer oszillierenden Auf- und Abbewegung des Stößels 18 - verursacht durch die Antriebseinrichtung 20 - gleichfalls eine oszillierende Auswölbung nach oben und nach unten, wodurch das Volumen des Reservoirs 10 in dem Behältnis 11 verändert wird. Da eine Rückströmung der flüssigen Schokolade in der Förderleitung 9 aufgrund des Förderprinzips der Fördereinrichtung 8 (Verdrängerpumpe) nicht möglich ist, führt eine Abwärtsbewegung de Stößels 18 zwangsläufig zu einer Förderung der flüssigen Schokolade durch die Kapillardüsen 13 an der Unterseite der Dosiereinrichtung 2. Die Unterseite 25 des Behältnisses 11 befindet sich in einem Abstand von ca. 1,5 mm von der Oberfläche 3 des Kühlbandes 6.

Infolge der Transportbewegung des Kühlbandes 6 werden die im Wesentlichen gleichmäßig aus sämtlichen Kapillardüsen 13 der Düsenleiste austretenden Schokoladenstränge von dem Kühlband 5 aufgenommen und in Richtung auf die entfernt gelegene Umlenkwalze 26 transportiert.

In dem Innern 24 des Behältnisses 7 herrschen nicht nur Sterilbedingungen sondern auch eine besonders niedrige Temperatur im Bereich von ca. - 30°C bis - 80°C. Des weiteren liegt auch die Temperatur des Kühlbandes 6 nach Verlassen der Umlenkwalze 27 bis ca. - 30°C bis - 80°C. Die flüssige Schokolade, die die Kapillardüsen 13 mit einer Temperatur von ca. 35°C bis 40°C verläßt, wird an der Oberfläche 3 des Kühlbandes 6 extrem rasch ausgekühlt, wobei nicht die bei der Herstellung klassischer Schokoladenpartikel gewünschte spezifische Kristallstruktur entsteht. Bei den Partikeln aus der gemäß dem vorliegenden Verfahren hergestellten Schokolade tritt daher bereits nach kurzer Lagerzeit ein deutlicher Verlust an Glanz ein. Bei dem für derartige sterilisierte Schokoladenpartikel vorgesehenen Einsatzzweck in Molkereiprodukten oder Fruchtzubereitungen, d. h. Einsatz in flüssigen, wasserhaltigen Medien, ist die Glanzerhaltung der fertigen Partikel nahezu ohne Bedeutung.

Aufgrund der großen Temperaturdifferenz zwischen der die Düsenleiste verlassenden flüssigen Schokolade und der Gastemperatur im Innern 24 des Behältnisses 7 sowie der niedrigen Oberflächentemperatur des Kühlbandes 6 geht der Aushärtungsprozeß der Schokoladenpartikel so rasch von statten, daß am Ende des Kühlbandes 5 an der Stelle des Pfeiles 27 bereits im Wesentlichen vollständig von außen nach innen ausgehärtete Schokopartikel von der Oberfläche 3 des Kühlbandes 6 abfallen und in einen Trichter 28 gelangen, um durch eine Öffnung 29 das Innere 24 des Behälters 7 zu verlassen.

Im Innern 24 des Behälters 7 befindet sich Stickstoffgas, das im Gegenstrom zur Bewegungsrichtung des Kühlbandes 6 durch den Behälter 7 hindurchgeleitet wird.

In dem in den Figuren 1 bis 3 dargestellten Ausführungsbeispiel der Vorrichtung 1 bildet die untere Stirnseite 21 des Kompensators 19 die Grenze zwischen dem Sterilraum im Innern 24 des Behältnisses 7 und der nicht sterilen Umgebung. Alternativ zu einer solchen Ausführungsform ist es auch möglich, daß die Grenze des Sterilraums von der Membran 15 selbst gebildet wird. In diesem Fall könnte die Membran ein Teil der oberen Wand 23 des Behältnisses 7 sein, wobei die Flansche 17o und 17u die Grenze zwischen der beweglichen (Membran 15) und der starren (Wandungen des Behältnisses 7) Grenze zwischen dem Sterilbereich und dem nicht sterilen Bereich bilden.

Je nach Einstellung der Hubfrequenz der Antriebseinrichtung 20 in Verbindung mit der Förderrate der Fördereinrichtung 8, der temperaturabhängigen Viskosität der sterilisierten Schokolade in dem Reservoir 10 sowie der Geometrie der Kapillardüsen 13 ergeben sich Partikel mit unterschiedlichem Durchmesser sowie unterschiedlicher Länge. Während ein Grenzfall von tropfen- oder linsenförmigen Schokopartikeln gebildet wird, besteht der andere Grenzfall in nahezu endlosen Schokoladenbändern, die erst im gekrümmten Übergangsbereich der Umlenkwalze 26 von dem Kühlband 6 abfallen und in den Trichter 28 gelangen. Es versteht sich, daß zumindest über längere Sicht betrachtet die Förderrate der Fördereinrichtung 8 im Wesentlichen mit der Förderrate übereinstimmt, die aus den Kapillardüsen 13 austritt, wobei letztere durch Hub und Frequenz der Membran 15 bestimmt wird.

## Patentansprüche

1. Vorrichtung (1) zur Herstellung von Partikeln aus Schokolade, wobei die in flüssiger Form vorliegende Schokolade in Form eines Filmes oder in Form von Streifen mittels einer Dosiereinrichtung (2) auf eine bewegte Oberfläche einer Kühleinrichtung (5) aufbringbar ist, mit der die Schokolade zumindest teilweise aushärtbar ist, **dadurch gekennzeichnet, daß** die Dosiereinrichtung (2) einen stets geöffneten Durchtrittsquerschnitt und eine elastisch verformbare Membran (15) aufweist, die mit einer Oberfläche mit der flüssigen, sterilisierten oder pasteurisierten Schokolade in Kontakt ist und die in eine Richtung ungefähr senkrecht zu ihrer Ebene reversibel auslenkbar ist, wodurch das Volumen eines Förderraums für die Schokolade veränderbar ist und daß die Dosiereinrichtung (2) und die Kühleinrichtung (5) gekapselt innerhalb eines geschlossenen, im Inneren (24) sterilisierbaren oder pasteurisierbaren Behältnisses (7) angeordnet sind.

2. Vorrichtung nach Anspruch 1, **dadurch gekennzeichnet, daß** die Membran (15) einen Abschnitt der Grenze des sterilisierbaren oder pasteurisierbaren Bereichs bildet.

3. Vorrichtung nach Anspruch 1, **dadurch gekennzeichnet, daß** die Membran (15) auf der der Schokolade abgewandten Oberfläche mit einem Betätigungsstößel (18) verbunden ist, der durch einen elastisch in seiner Länge veränderbaren Kompensator (19) durch die Grenze des sterilisierten oder pasteurisierten Bereichs hindurchführbar ist.

4. Vorrichtung nach einem der Ansprüche 1 bis 3, **dadurch gekennzeichnet, daß** die Dosiereinrichtung (2) mindestens eine Düse (13) für den flüssigen Austritt der Schokolade aus dem Förderraum aufweist.

5. Vorrichtung nach Anspruch 4, **dadurch gekennzeichnet, daß** eine Leiste von Kapillardüsen (13) vorgesehen ist, deren Austrittsdurchmesser ca. 0,5 mm bis 3,0 mm beträgt.

6. Vorrichtung nach Anspruch 5, **dadurch gekennzeichnet, daß** die Austrittsöffnung der Kapillardüsen (13) einen Abstand von der bewegten Oberfläche der Kühleinrichtung (3) zwischen 0,5 mm und 10,0 mm aufweist.

7. Vorrichtung nach einem der Ansprüche 1 bis 6, **dadurch gekennzeichnet, daß** die Kühleinrichtung (3) eine rotierende Kühlwalze oder ein umlaufend bewegtes Kühlband (6) ist.

8. Vorrichtung nach einem der Ansprüche 1 bis 7, **dadurch gekennzeichnet, daß** die Temperatur eines im Innern des Behältnisses (7) befindlichen Gases im Bereich der Aufgabe der flüssigen Schokolade weniger als 0°C, vorzugsweise weniger als -20°C beträgt und die Temperatur der Oberfläche der Kühleinrichtung (5) im Bereich der Aufgabe der flüssigen Schokolade weniger als 0°C vorzugsweise weniger als -20°C beträgt.

9. Vorrichtung nach einem der Ansprüche 1 bis 8, **dadurch gekennzeichnet, daß** eine kontinuierlich betreibbare Drehkolbenpumpe für die Förderung der Schokolade durch den Förderraum und den Durchtrittsquerschnitt der Dosiereinrichtung (2) vorgesehen ist.

## Claims

1. An apparatus for making chocolate particles, with the chocolate present in liquid form being applicable in the form of a film or in the form of strips by means of a dosing device (2) onto a moved surface of a cooling device (5) with which the chocolate can harden at least partly, **characterized in that** the dosing device (2) comprises a continually opened passage cross section and an elastically deformable membrane (15) which with one surface is in contact with the liquid, sterilized or pasteurized chocolate and which can be reversibly deflected in a direction approximately perpendicular to its plane, as a result of which the volume of a conveying space for the chocolate can be changed, and that the dosing device (2) and the cooling device (5) are arranged in an encapsulated manner within a closed container (7) which can be sterilized or pasteurized in the interior.

2. An apparatus according to claim 1, **characterized in that** the membrane (15) forms a section of the boundary of the sterilizable or pasteurizable region.

3. An apparatus according to claim 1, **characterized in that** the membrane (15) is joined with an actuating tappet (18) on the surface averted from the chocolate, which tappet can be guided through the boundary of the sterilized or pasteurized region by means of a compensator (19) which can be changed elastically in its length.

4. An apparatus according to one of the claims 1 to 3, **characterized in that** the dosing device (2) comprises at least one nozzle (13) for the liquid delivery of the chocolate from the conveying space.

5. An apparatus according to claim 4, **characterized in that** a strip of capillary nozzles (13) is provided whose outlet diameter is approximately 0.5 mm to 3.0 mm.

6. An apparatus according to claim 5, **characterized in that** the outlet opening of the capillary nozzles (13) has a distance from the moved surface of the cooling device (3) of between 0.5 mm and 10.0 mm.

7. An apparatus according to one of the claims 1 to 6, **characterized in that** the cooling device (3) is a rotating cooling roller or a revolving moved cooling band (6).

8. An apparatus according to one of the claims 1 to 7, **characterized in that** the temperature of a gas situated in the interior of the container (7) is in the region of the feeding of the liquid chocolate less than 0°C, preferably less than -20°C, and the temperature of the surface of the cooling device (5) in the region of the feeding of the liquid chocolate is less than 0°C, preferably less than -20°C.

9. An apparatus according to one of the claims 1 to 8, **characterized in that** a continuously operating rotary pump is provided for the conveyance of the chocolate through the conveying space and the passage cross section of the dosing device (2).

## Revendications

1. Dispositif (1) pour la fabrication de particules de chocolat, le chocolat sous forme liquide pouvant être appliqué sous forme d'une couche ou sous forme de bandes au moyen d'un dispositif doseur (2) sur une surface mobile d'un dispositif de refroidissement (5), qui permet de durcir au moins partiellement le chocolat, **caractérisé en ce que** le dispositif de dosage (2) présente une section transversale de passage toujours ouverte et une membrane élastiquement déformable (15) qui est en contact par une surface avec le chocolat liquide, stérilisé ou pasteurisé et qui est orientable dans une direction approximativement perpendiculairement à son plan de manière réversible, le volume d'une enceinte de transport étant modifiable pour le chocolat et **en ce que** le dispositif de dosage (2) et le dispositif de refroidissement (5) sont disposés encapsulés à l'intérieur d'un récipient (7) fermé, stérilisable ou pasteurisable à l'intérieur (24).

2. Dispositif selon la revendication 1, **caractérisé en ce que** la membrane (15) forme une section de la limite de la zone stérilisable ou pasteurisable.

3. Dispositif selon la revendication 1, **caractérisé en ce que** la membrane (15) est reliée sur la surface détournée du chocolat à un poussoir d'actionnement (18) qui est introduisible par un compensateur (19) réglable en longueur à travers la limite de la zone stérilisée ou pasteurisée.

4. Dispositif selon l'une des revendications 1 à 3, **caractérisé en ce que** le dispositif de dosage (2) présente une buse (13) pour la sortie du chocolat liquide hors de l'enceinte de transport.

5. Dispositif selon la revendication 4, **caractérisé en ce qu'**une baguette de buses capillaires (13) est prévue dont le diamètre de sortie est compris entre 0,5 mm et 3,0 mm.

6. Dispositif selon la revendication 5, **caractérisé en ce que** l'ouverture de sortie des buses capillaires (13) est disposée à une distance de la surface déplacée du dispositif de refroidissement (3) comprise entre 0,5 mm et 10,0 mm.

7. Dispositif selon l'une des revendications 1 à 6, **caractérisé en ce que** le dispositif de refroidissement (3) est un cylindre de refroidissement rotatif ou une bande de refroidissement (6) déplacée en rotation.

8. Dispositif selon l'une des revendications 1 à 7, **caractérisé en ce que** la température d'un gaz se trouvant à l'intérieur du récipient (7) dans la zone de la délivrance du chocolat liquide est inférieure à 0°C de préférence inférieure à -20°C et la température de la surface du dispositif de refroidissement (5) dans la zone de la délivrance du chocolat liquide est inférieure à 0°C de préférence inférieure à -20°C.

9. Dispositif selon l'une des revendications 1 à 8, **caractérisé en ce qu'**une pompe rotative à piston actionnée en continu est prévue pour le transport du chocolat à travers l'enceinte de transport et la section transversale de passage du dispositif de dosage (2).
